Europäisches Patentamt

**European Patent Office**

Office européen des brevets

(19)

(11) Publication number: **0 065 359**
A1

# EUROPEAN PATENT APPLICATION

(21) Application number: **82302073.0**

(22) Date of filing: **22.04.82**

(51) Int. Cl.³: **C 08 L 23/04, C 08 J 5/18**

(30) Priority: **27.04.81 US 258041**

(43) Date of publication of application: **24.11.82**
**Bulletin 82/47**

(84) Designated Contracting States: **BE DE FR GB IT SE**

(71) Applicant: **UNION CARBIDE CORPORATION, Old Ridgebury Road, Danbury Connecticut 06817 (US)**

(72) Inventor: **Corwin, Michael Allen, 194 Old Forge Road, Millington New Jersey (US)**
Inventor: **Niedzielski, A., deceased (US)**
Inventor: **Gallo, Patrick J., 4425 Nassau Way, Marietta Georgia (US)**

(74) Representative: **Baverstock, Michael George Douglas et al, BOULT, WADE & TENNANT 27 Furnival Street, London, EC4A 1PQ (GB)**

(54) **Self-sealing stretch wrap film and film forming composition.**

(57) A stretch wrap film having a transverse direction Elmendorf tear resistance > about 7.9 kg/mm, a machine direction Elmendorf tear resistance > about 3.5 kg/mm, and an Instron puncture resistance > 59 J/mm, said film capable of self-sealing at temperatures between −15°C and 60°C, and capable of maintaining the integrity of a seal at temperatures below −15°C, the film having the property of being essentially pinhole free at a thickness between 12.7 μm and 25.4 μm. The stretch wrap film is formed from a composition comprised of: (1) more than 60% and less than 80% by weight of a high pressure, low density ethylene polymer; (2) more than 20% and less than 40% by weight of a low pressure, low density hydrocarbon interpolymer; and (3) more than 0.8% and less than 5% by weight of a liquid polybutene having a number average molecular weight < about 3500 Daltons.

-1-

SELF-SEALING STRETCH WRAP FILM AND FILM FORMING COMPOSITION

This invention relates to an extrudable composition capable of forming a stretch wrap film, the composition comprised of a high pressure, low density (HP-LD) ethylene polymer, a low pressure, low density (LP-LD) hydrocarbon interpolymer, and a liquid polybutene.

Thermoplastic stretch wrap films are well known. They are used for the over-wrap packaging of goods, e.g., for wrapping food for refrigeration and for unitizing pallet loads. There are a variety of overwrapping techniques which are employed utilizing such stretch wrap films. According to such overwrapping techniques, a package load is overwrapped by a single or multi-layer band of stretchable film that is held in tension around the package load but not heat-shrunk to it. A description of one such stretch wrap film overwrapping technique is found in U.S. -A- 4,050,221 to P.R. Lancaster et al.

Prior art stretch wrap films have included film materials such as polyvinyl chloride (PVC); HP-LD polyethylene (PE) homopolymer resins; HP-ethylene vinyl acetate (EVA) copolymer resins; LP-LD ethylene-butene-1 copolymers; and co-extruded laminate compositions comprised of one or more of the following materials: HP-LD PE homopolymer resins; HP-EVA copolymer resins; and LP-LD ethylene interpolymers.

Four important physical properties of a good stretch wrap film are its puncture resistance, its elongational characteristics, its Elmendorf tear resistance, and its self-sealability at low temperatures. Resistance to puncture is important because during overwrapping techniques, the stretch wrap film contacts sharp edges or protrusions on the pallet load. Puncture resistance is a function of the capacity of such stretch wrap film to elongate biaxially. Resistance to tearing is important because during overwrapping techniques or during subsequent handling of the wrapped pallet, if an edge of the stretch wrap film is nicked, abraded, punctured, or in any way weakened, premature tearing of the film will occur. Self-sealability refers to the film's ability to cling to itself without the application of special adhesives or heat. This same phenomenon is also referred to as blocking. Since the stretch wrap films are used at temperatures between -17°C and 60°C, it is important for the film, once sealed, to retain the integrity of such seal throughout this temperature range.

Although the prior art stretch wrap films identified hereinabove have met some of the aforementioned requirements, they still have various disadvantages. PVC, HP-LD PE homopolymer resins, HP-EVA resins, HP-LD ethylene/lower alkyl acrylate copolymers, and LP-LD ethylene-butene-1 copolymer resins have either (1) poor resistance to notched tear in the machine or transverse direction of the film, or (2) poor resistance to puncture. For example, HP-EVA resins containing between 6 and 15% VA possess excellent puncture resistance, but have very poor Elmendorf tear resistance, particularly in the transverse film direction. HP-EVA resins containing less than 6% VA and HP-LDPE homopolymer resins provide good Elmendorf tear resistance, but poor puncture resistance. Coextruded prior art laminate films may have excellent puncture resistance, Elmendorf tear resistance and self-sealability at low temperatures, but the formation of such films requires the use of specialized and costly multi-layer processing equipment.

The use of partial carboxylic acid esters of polyols have been described in U.S. -A- 3,932,563 as providing self-

-3-

sealability properties in a stretch wrap film produced from a composition containing a HP-EVA type resin, the aforementioned polyol ester, and a hydrocarbon resin such as a polyterpene resin or hydrogenated polycyclopentadiene resin alone or in conjunction with polybutylene/polyisobutylene. However, it has been found that these "cling" agents, i.e., the carboxylic acid esters of polyols, do not provide stretch wrap films with good self-sealability at -15°C. It is known that liquid polybutenes of low molecular weight provide good self-sealability at about -15°C. Increasing the concentration of cling agent can improve low temperature self-sealability, but results in excessive "bleed-out" of the cling agent at the higher temperature. By "bleed-out" is meant the migration or diffusion of the cling agent to the stretch wrap film surface-air interface.

The present invention seeks to provide an extrudable composition for forming, via a tubular blown or slot cast film extrusion process, an improved stretch wrap film.

This invention also seeks to provide an extrudable composition for forming a stretch wrap film having good puncture and Elmendorf tear resistance and which is self-sealable at low temperatures.

This invention further seeks to provide an extrudable composition and stretch wrap film formed therefrom which composition is comprised of the polymers herein defined.

This invention additionally seeks to decrease the extensional viscosity of a HP-LD ethylene polymer stretch wrap film by the addition thereof of a LP-LD hydrocarbon interpolymer.

This invention still further seeks to provide an extrudable film forming composition containing a liquid polybutene

-4-

which provides self-sealability at a temperature between -15°C and 60°C without excessive bleeding out of the liquid polybutene at the air-polymer interface of a stretch wrap film formed from the composition.

An extrudable composition has been found which forms a stretch wrap film having the property of being essentially pinhole free at a thickness between 12.7 and 25.4 μm. The stretch wrap film has good puncture and Elmendorf tear resistance, and is self-sealable at temperatures between -15°C and 60°C. The extrudable composition comprises: (1) more than 60%, preferably more than 68%, and less than 80%, preferably less than 75%· by weight of a HP-LD ethylene polymer; (2) more than 20%, preferably more than 25%, and less than 40%, preferably less than 32% by weight of a LP-LD hydrocarbon interpolymer; and .(3) more than 0.8%, preferably more than 1%, and less than 5%, preferably less than 3% by weight of a liquid polybutene having a number average molecular weight below 3500 Daltons.

## HP-LD Ethylene Polymer

HP-LD ethylene polymer refers to an ethylene polymer, such as polyethylene, which has an annealed density up to about 0.935 gram/cm$^3$ and preferably, from 0.915 to 0.925 gram/cm$^3$. The HP-LD polyethylene is made commercially by the well-known high pressure process, utilizing free radical initiators. In such a process, ethylene is homopolymerized with free radical catalysts under pressures greater than 103 MPa and up to 345 MPa at temperatures up to 300°C in tubular or stirred reactors in the absence of solvents.

Also useful, and within the scope of the present invention are copolymers of ethylene with a vinyl (or hydrocarbyl substituted vinyl) ester of a $C_1-C_{30}$ monocarboxylic acid. The carboxylic acid is preferably aliphatic, saturated and monocarboxylic, e.g., vinyl propionate, vinyl hexoate, vinyl octaoate, vinyl dodecanate, vinyl behenate, or isopropyl acetate. The preferred ester is vinyl acetate in a concentration of 2-12% by weight in the copolymer. Also within the scope of the present invention are copolymers of ethylene with alkyl esters of acrylic/methacrylic acids such as methyl acrylate, ethyl acrylate, butyl acrylate, and ethyl methacrylate. Other alpha olefins also may be present in the above copolymers in minor concentrations. The aforementioned copolymers have a density between 0.915 to 0.935 grams/$cm^3$.

### LP-LD Hydrocarbon Interpolymer

Suitable LP-LD hydrocarbon interpolymers for the film forming compositions of the present invention include copolymers of ethylene or butene-1 and one or more $C_3$ to $C_{10}$ alpha olefins. These copolymers have a density of $\geqslant 0.910$ to $\leqslant 0.940$ grams/$cm^3$ and preferably of from $\geqslant 0.915$ to $\leqslant 0.928$ grams/$cm^3$. These copolymers can be made in a solution, slurry or gas phase process which is well known to those skilled in the art.

The LP-LD hydrocarbon interpolymers used for the compositions of this invention should have a standard melt index from 0.1 to 10 decigrams per minute and preferably from 0.5 to 3.0 decigrams per minute.

The extrudable LP-LD hydrocarbon interpolymers employed in the extrudable compositions of the present invention are normally solid materials, that is, solid at room temperature. Any extrusion grade LP-LD hydrocarbon interpolymer can be used in the compositions of the present invention. The term LP-LD hydrocarbon interpolymer thus includes interpolymers of one or more olefin(s) with

-6-

each other, and/or up to about 30 weight percent of one or more monomer(s) which is copolymerizable with such olefin(s). The olefins include those such as ethylene, propylene, butene-1, isobutylene, pentene-1, 4-methyl-pentene-1, hexene-1, octene-1, nonene-1, decene-1. Interpolymers include one or more of such olefins and one or more other monomers which are interpolymerizable with such olefins, such as other vinyl and diene compounds, i.e., those having the group -C=C-.

Preferred copolymers are the ethylene copolymers such as ethylene/propylene copolymers, ethylene/butene-1 copolymers, ethylene/isobutylene copolymers, ethylene/pentene-1 copolymers, ethylene/4-methyl-pentene-1 copolymers, ethylene/ hexene-1 copolymers, and ethylene/octene-1 copolymers. Preferred ethylene interpolymers would include two or more of the following: propylene, butene-1, isobutylene, pentene-1, hexene-1, 4-methyl-pentene-1 and octene-1. Preferred butene-1 interpolymers would include ethylene, propylene, hexene-1, 4-methyl-pentene-1 and octene-1 as comonomers.

Preferred low pressure, low density ethylene copolymers for use in the present invention include those which may be produced in accordance with the procedures set forth in U.S. Patent Application Serial No. 892,325 filed March 31, 1975, and refiled as Serial No. 014,414 on February 27, 1979, in the names of F.J. Karol et al. and entitled "Preparation of Ethylene Copolymers in Fluid Bed Reactor", and the procedures set forth in U.S. Patent Application Serial No. 892,322, filed March 31, 1978, and refiled as Serial No. 012,720 on February 16, 1979, in the names of G.L. Goeke et al. and entitled "Impregnated Polymerization Catalyst, Process for Preparing, and Use for Ethylene Copolymerization" as well as procedures which will produce ethylene hydrocarbon copolymers with properties as heretofore described. U.S. Application Serial No. 014,414 corresponds to European Patent Application No. 79100953.3 which was opened to the public on October 17, 1979 as Publication No. 4645 and U.S. Application Serial No. 012,720 corresponds to European Patent Application No. 79100958.2 which was opened to the public on October 17, 1979 as Publication No. 4647. The disclosures of Publications Nos. 4645 and 4647 are incorporated herein by reference.

Other low pressure, low density ethylene hydrocarbon polymers preferred for use in the present invention are those which may be prepared as described in U.S. -A- 4,011,382, entitled "Preparation of Low and Medium Density Ethylene Polymer in Fluid Bed Reactor" by I.J. Levine et al., the disclosure of which is incorporated herein by reference.

## Liquid Polybutene

Liquid polybutenes are highly atactic polymers synthesized from isobutene or butene-1 monomer. The liquid polybutenes suitable for use in the present invention have a number average molecular weight (as measured by Mechrolab Osmometer) below 3500 Daltons, preferably between 600 and 2700 Daltons.

## Anti-Oxidants

The film forming compositions of the present invention also may contain at least one anti-oxidant for the polymer composition. These anti-oxidants are present in stabilizingly effective quantities. Such amounts are from 0.002 to 0.5, and preferably from 0.01 to 0.05, percent by weight, based on the weight of the olefin polymer. The anti-oxidant stabilizers which may be employed in the compositions of the present invention

-8-

include all those polyolefin anti-oxidants commonly employed in olefin polymer based film extrusion compositions. These materials are capable of providing anti-oxidant protection at processing temperatures of the order of from 135°C to 343°C, or higher.

Such anti-oxidant stabilizers include hindered phenols, such as p-hydroxyphenylcyclohexane; di-p-hydroxyphenylcyclohexane dicresylolpropane; tertiary butyl para cresol; 2,6-di-tert-butyl-p-cresol; 2,4,6-tri-tert-butylphenol; octadecyl-3-(3,5-di-tert-butyl-4-hydroxyphenyl)propionate; tetra bis[methylene 3-(3',5'-di-tert-butyl-4'-hydroxyphenyl)propionate]methane; 1,3,5-trimethyl-2,4,6-tris(3,5-di-tert-butyl-4-hydroxybenzyl) benzene; tris(3,5-di-tert-butyl-4-hydroxybenzyl)isocyanate; 1,3,5-tris(4-tert-butyl-3-hydroxy-2,6 dimethyl benzyl)-1,3,5-triazine-2,4,6-(1H,3H,5H)-trione; and bis-[3,3-bis-4'-hydroxy-3'-tert-butyl-phenyl)butanoic acid]-glycol ester, condensation products of dialkylphenols with formaldehyde, reaction products of phenol with styrene, 1,1'-methylene-bis(4-hydroxy-3,5-tert-butylphenol), 2,2'-methylene-bis-(4-methyl-6-tert-butylphenol), 2,6-(2-tert-butyl-4-methyl-6-methylphenol)-p-cresol, phenylethyl-pyrocatechol, phenolisopropylpyrocatechol, 1,1,3-tris(2'-methyl-5'-t'-butyl-4-hydroxy phenol)butane, 2,2-methylene-bis[6-(α-methylcyclohexyl)-4-methylphenol], 1,3,5-trimethyl-2,4,6-tris-(3',5'-di-t-butyl-4-hydroxybenzyl)benzene and α-naphthol; and sulfur containing compounds such as 2,2'-thio-bis(4-methyl-6-tert-butylphenol), 4-4'-thio-bis-(3-methyl-6-tert-butylphenyl), distearyl thiodipropionate and dilauryl thiodipropionate; and phosphite compounds such as tri(mixed mono and dinonyl phenyl)phosphites; phosphite esters of lauryl and stearyl alcohol di-stearyl-pentaerythritol-diphosphite; bis(2,4-di-tert-butyl-

phenyl)pentaerythritol diphosphite; and tri-2,4-di-tert-butyl-phenyl phosphite ester.

The preferred primary or hindered phenolic anti-oxidant stabilizers which are employed in the compositions of the present invention are 2,6-ditertiary butyl paracresol, or butylated hydroxy toluene (BHT); octadecyl-3-(3,5-di-tert-butyl-4-hydroxy phenyl)propionate (Irganox 1076); or tetra-bis[methylene 3-(3',5'-di-tert-butyl-4'-hydroxyphenyl)propionate]methane (Irganox 1010). The preferred secondary stabilizers include dilauryl thiodipropionate (DLTDP); distearyl thiodipropionate (DSTDP); tri(mixed mono and dinonyl phenyl) phosphite (Polygard); di-stearyl-pentaerythritol diphosphite (Weston 618).

The hindered phenolic anti-oxidants may be used individually or in various combinations with one another or the secondary stabilizers in the compositions of the present invention. Other additives may include colorants.

### Preparation of Stretch Wrap Film Forming Compositions

The stretch wrap film forming compositions can be prepared by several methods which are well known to those skilled in the art. In one method, the components are dry blended together in a roll drum for 20 minutes at room temperature. In another method, the components are compounded utilizing a Banbury batch mixer coupled to a Farrel Birmingham single screw extruder melt pump. The components are mixed in the Banbury mixer for from 4 to 5 minutes, dropped at a temperature from 125°C to 135°C and extruded through an extruder melt pump using a throat temperature of 140°C, a barrel temperature of 150°C and a die temperature of 175°C.

### Extrusion of Stretch Wrap Film

The stretch wrap film forming compositions described herein may be extruded by either a tubular blown film or a slot cast film extrusion process. Details of these processes are well known to those skilled in the art.

In the tubular blown film process, the film forming composition is first melted and then extruded through an annular die. The die has a die gap greater than 0.381 mm and less than 1.27 mm, and preferably greater than 0.508 mm and less than 0.889 mm. The polymer film forming composition is extruded at a melt temperature between $163^{\circ}C$ and $218^{\circ}C$. The polymer film forming composition is extruded in an upward vertical direction in the form of either a bubble or a tube although it also can be extruded either downwardly or horizontally. The tubular extrudate is expanded to the desired dimensions and then cooled by one of several conventional techniques which are well known in the art, e.g., forced air, mandril, and water quench. The tubular film, or bubble, is then flattened by passing the film through a collapsing frame and a set of nip rolls. The nip rolls are driven, thereby providing a means of drawing the tubular film or bubble away from the annular die.

A positive pressure of a gas, such as air or nitrogen, is maintained inside the tubular bubble. As is known in the operation of conventional blown film processes, the presence of the gas is controlled to impart the desired dimensional orientation to the film tube or bubble. The degree of tubular bubble expansion may be measured as the ratio of the expanded bubble circumference to the circumference of the die annulus. This ratio is generally in the range of 1:1 to 6:1 and preferably from 1.5:1 to 3.0:1.

In the slot cast film process, the film forming composition is first melted and then extruded through a rectangular orifice die. The polymer film forming composition is extruded at a melt temperature between 200°C and 315°C. The molten polymer extrudate is in the form of a sheet and is extruded in a downward vertical direction. After exiting the die, the molten polymer extrudate comes in close proximity to, and sometimes contacts, a water-cooled chill roll and is solidified. A secondary set of rollers provides a means of withdrawing the molten polymer extrudate sheet from the die and under the primary chill roll.

Extrusion processes, in general, impart a biaxial orientation to a thermoplastic film. The term machine direction, as applied to describing the orientation of thermoplastic films, refers to the film axis which is parallel to the direction in which the polymer extrudate exits the die. The term transverse direction refers to the film axis which is perpendicular, and in the plane of the film, to the machine direction.

The drawdown characteristics of the stretch wrap film forming composition described herein are excellent. The presence of the LP-LD hydrocarbon interpolymer lowers extensional viscosity. Very thin gauge films can be produced, essentially free of pinholes, from these stretch wrap film forming compositions even when the film forming composition is significantly contaminated with foreign particles and/or gels.

The films produced from these stretch wrap film forming compositions are usually prepared in sheets which are from 2.5 μm to 125 μm thick, and preferably from 12.5 μm to 100 μm in thickness.

### Physical Properties of the Stretch Wrap Film

As hereinbefore noted, the physical properties which are particularly significant for the successful use of thermoplastic films in stretch wrap applications include their Instron puncture resistance and their Elmendorf tear resistance. With respect to the latter, the transverse direction Elmendorf tear resistance is particularly important. A film which possesses excellent transverse direction Elmendorf tear resistance will, in general, not fail during the stretch wrapping operation even though it may become punctured during the operation.

The thermoplastic stretch wrap films of this invention have self-sealability, or cling. At the end of a stretch wrapping cycle, the trailing edge of film unitizing the goods must be fastened to the package to prevent unraveling of the film and subsequent deunitization of the packaged goods. Methods commonly practiced in the art to fasten this trailing edge include the use of heat sealing, use of an adhesive, or mechanical means such as staples, or, the use of thermoplastic stretch wrap films which possess the property of self-sealability. The latter method is preferred for reasons of ease and convenience, material economics, and labor savings.

The stretch wrap films of this invention retain excellent self-sealability properties as well as maintain the integrity of the seal, throughout the distribution cycle of the package, at temperatures in the range of from -15°C to 60°C.

The thermoplastic stretch wrap films of this invention have a machine direction Elmendorf tear resistance of greater than about 3.2 kg/mm, preferably greater than about 4.7 kg/mm, and most preferably greater than about 5.8 kg/mm; a transverse direction Elmendorf tear resistance of greater than about 7.9 kg/mm, preferably greater than about 8.9 kg/mm, and most preferably greater than about 10.8 kg/mm; and an Instron puncture resistance of greater than about 59 J/mm, and preferably greater than about 66 J/mm.

The following example is illustrative of the present invention and is not intended as a limitation of the scope thereof.

## Example

### Preparation of Polymer Resins

Two low pressure, low density ethylene-butene-1 copolymers were prepared according to the procedure disclosed in South African Patent Publication No. 79-01365, published September 22, 1980, entitled "Process for Making Film From Low Density Ethylene Hydrocarbon Copolymer" by W.A. Fraser et al. The properties of the ethylene-butene-1 copolymers were determined by the following methods:

Density was determined according to ASTM D-1505. A plaque was conditioned for one hour at 100°C to approach equilibrium crystallinity. Density is reported as $gms/cm^3$.

Melt Index (MI) was determined according to ASTM D-1238, Condition E. It was measured at 190°C and 303kPa and reported as grams/10 minutes.

Flow Index (HLMI) was measured according to ASTM D-1238, Condition F. It was measured at 3030kPa and reported as grams per 10 minutes.

Melt Flow Ratio (MFR) was calculated as Flow Index/ Melt Index.

Puncture Resistance (Instron) was measured according to the following procedure. A film of measured thickness is supported on a 8.26 cm diameter ring which, in turn, is mounted on an Instron tensile testing machine. A blunt ended plunger having a 1.91 cm diameter, hemispherical head is pressed through the ring of supported film at a rate of 50.8 cm/min. The energy required to deform the film to rupture is normalized by film thickness and reported as J/mm.

Elmendorf Tear Strength was measured according to ASTM D-1922-67. This is a notched tear test. A 6.4 cm x 8.9 cm film specimen is subjected to a "pant leg" type tear. This is a pendulum impulse type test. It measures the force required to propagate a tear. The tear strength is measured in grams. The data presented herein have been normalized by film thickness and reported as kg/mm.

Elongation was measured according to ASTM D-882. Film strips, 2.54 cm x 12.7 cm are clamped at a 5.1 cm gauge length and deformed at a jaw separation rate of 50.8 cm/min. Elongation at break is measured by following the deformation of 2.54 cm gauge marks placed on the film sample and is reported in percent.

Cling was measured according to the following procedure The device designed to measure cling is used on the Instron. It consists of a 0.6 cm thick metal plate on which is secured a sample of the film to be tested, a clamp which holds one end of a 2.54 cm wide film specimen, a string which connects the clamp at one end and a 100 gram weight at the other, a metal or glass rod over which the string slides, and a ringstand to hold the rod parallel to the Instron crosshead.

The 2.54 cm wide by 22.9 cm long film sample is prepared by placing the wrap between two pieces of paper and cutting on a paper cutter.

20.3 cm of the 22.9 cm inch long sample is placed on the plate being evaluated. The film is firmly rolled flat onto the plate with a rubber roller. The additional 2.54 cm of the sample is clamped in the small steel clamp. The plate covered with the larger film sample is mounted horizontally on the Instron crosshead. A glass or metal rod is held parallel to the plate edge and to the crosshead, 12.7 cm from the edge of the plate. The string attached to the clamp holding the sample is hung over the rod. A 100g mass is attached to the end of the string. In this position, the mass is exerting a force which tries to slide the film over the plate. Generally, the coefficient of friction is so great that the film will not slide. The plate and crosshead are raised 6.4 cm above the rod. Next, the crosshead is lowered at a rate of 50.8 cm/minute. As the plate drops below the level of the rod, the film begins to peel from the plate. When the film releases completely from the plate, the crosshead is stopped. The distance the plate dropped below the rod in centimeters is related to the magnitude of adhesive force or cling between the film and the plate.

One of the ethylene-butene-1 copolymers, designated A, had the following properties: a melt index of 2.0; a MFR of 28; and a density of 0.918 $gm/cm^3$.

The second ethylene-butene-1 copolymer, designated B, had the following properties: a melt index of 3.0; a MFR of 28; and a density of 0.921 $gm/cm^3$.

Two high pressure, low density polymers made by the well known high pressure tubular reactor process were used. The density, melt index (MI), flow index (HLMI) and melt flow ratio (MFR) were measured using the same methods which were used in determining these properties for the previously mentioned low pressure, low density ethylene-butene-1 copolymer.

One of the high pressure, low density polymers, designated X, had the following properties: a melt index of 0.9; a MFR of 66; a density of about .932 gm/ccm, and it contained about 4.5 weight percent of vinyl acetate.

The other high pressure, low density polymer, designated

Y, had the following properties: a melt index of 2.0, a MFR of 47, a density of about .929 gm/cm, and it contained about 6.0 weight per cent of vinyl acetate.

The polybutenes used had the following number average molecular weight (as measured by Mechrolab Osmometer):

Liquid Polybutene A -  610

Liquid Polybutene B - 2060

Liquid Polybutene C - 2300

Liquid Polybutene D - 2700

Liquid Polybutene E - 2500

Preparation of Extrudable Compositions

The following compositions were compounded utilizing a Banbury mixer coupled to a Farrel Birmingham single screw extruder melt pump as previously described. Twenty-one film forming compositions were prepared and are set forth in Table I below:

TABLE I

| Composition No. | Composition | Weight % |
|---|---|---|
| 1 | Polymer B | 25 |
|   | Polymer Y | 75 |
| 2 | Polymer A | 25 |
|   | Polymer Y | 75 |
| 3 | Polymer A | 25 |
|   | Polymer X | 75 |
| 4 | Polymer A | 35 |
|   | Polymer Y | 65 |
| 5 | Polymer B | 24.5 |
|   | Polymer Y | 73.5 |
|   | Polybutene B | 2.0 |
| 6 | Polymer B | 24.5 |
|   | Polymer Y | 73.5 |
|   | Polybutene C | 2.0 |

TABLE I (cont'd)

| Composition No. | Composition | Weight % |
|---|---|---|
| 7 | Polymer B | 24.2 |
| | Polymer Y | 72.8 |
| | Polybutene B | 3.0 |
| 8 | Polymer B | 24.5 |
| | Polymer Y | 73.5 |
| | Polybutene D | 2.0 |
| 9 | Polymer B | 24.2 |
| | Polymer Y | 72.8 |
| | Polybutene D | 3.0 |
| 10 | Polymer B | 24.5 |
| | Polymer Y | 73.5 |
| | Polybutene A | 2.0 |
| 11 | Polymer B | 24.2 |
| | Polymer Y | 72.8 |
| | Polybutene A | 3.0 |
| 12 | Polymer B | 50 |
| | Polymer Y | 50 |
| 13 | Polymer A | 50 |
| | Polymer Y | 50 |
| 14 | Polymer A | 50 |
| | Polymer X | 50 |
| 15 | Polymer Y | 100 |
| 16 | Polymer A | 5 |
| | Polymer Y | 95 |
| 17 | Polymer A | 10 |
| | Polymer Y | 90 |
| 18 | Polymer A | 15 |
| | Polymer Y | 85 |
| 19 | Polymer A | 20 |
| | Polymer Y | 80 |
| 20 | Polymer A | 49 |
| | Polymer Y | 49 |
| | Polybutene C | 2.0 |
| 21 | Polymer A | 100 |

-18-

All of the above compositions contained 200 parts per million (ppm) of tetra-bis[methylene 3- (3',5'-di-tert-butyl-4'-hydroxyphenyl)propionate]methane and 200 ppm of di-stearyl-pentaerythritol diphosphite as anti-oxidants. These anti-oxidants were excluded from the weight percent calculations for simplification.

The extrudable film forming compositions 1-21 were extruded using a blown film extrusion process described herein as follows:

The stretch wrap film forming compositions were extruded on a 38.1 mm 24:1 L/D Sterling extruder equipped with a 76.2 mm diameter Sano spiral pin die having a die gap of .762 mm. The melt temperature ranged between about 181°C to about 198°C. A screw speed of about 51 RPM was used. All samples were produced at a 2:1 ratio of bubble circumference to die annulus circumference and are about 22.9 μm in thickness. The throughput rate was about 10 kg/hr.

Results of tests for Elmendorf tear resistance, Instron puncture resistance and elongation are summarized in Table II hereinbelow:

## TABLE II

| Run With Composition No. | MD Tear Resistance (kg/mm) | TD Tear Resistance (kg/mm) | Puncture Resistance (J/mm) | MD Elongation % | TD Elongation % |
|---|---|---|---|---|---|
| 1 | 7.2 | 8.2 | 66 | 266 | 588 |
| 2 | 4.5 | 9.1 | 73 | 288 | 602 |
| 3 | 3.2 | 10.0 | 73 | 276 | 626 |
| 4 | 5.2 | 11.8 | 59 | -- | -- |
| 5 | 7.0 | 8.3 | -- | -- | -- |
| 6 | 6.1 | 9.3 | -- | -- | -- |
| 12 | 4.7 | 12.6 | 71 | 314 | 662 |
| 13 | 1.3 | 13.7 | 93 | 334 | 634 |
| 14 | 1.6 | 14.0 | 72 | 310 | 626 |
| 15 | 7.4 | 6.2 | 63 | 250 | 552 |
| 16 | 6.1 | 4.4 | -- | -- | -- |
| 17 | 5.8 | 5.6 | -- | -- | -- |
| 18 | 5.7 | 6.5 | -- | -- | -- |
| 19 | 5.8 | 6.3 | -- | -- | -- |
| 21 | 3.5 | 9.6 | 53 | 690 | 740 |

-19-

Results of tests for cling at room temperature and bleed out at 60°C are reported in Table III hereinbelow:

TABLE III

| Run With Composition No. | Cling (Room Temp.) | Bleed-Out |
|---|---|---|
| 5 | 5.5 | 0 |
| 6 | 6.0 | 0 |
| 7 | -- | 0 |
| 8 | 5.5 | 0 |
| 9 | 10.75 | 0 |
| 10 | 9.76 | 0 |
| 11 | 9.75 | 0 |
| 20 | 7.25 | 0 |

Runs with compositions 1 through 4 illustrate the extrudable composition of the invention without the cling agent. The purpose of these runs was to illustrate the novel feature of the compositions of this invention, which are the improved Elmendorf tear and puncture resistance exhibited by compositions of this invention.

Runs with compositions 5 through 11 illustrate the extrudable compositions of the invention including the cling agent. As can be seen from the results, the addition of the cling agent does not adversely affect the physical properties of the film but does add the cling property to the film.

Runs with compositions 12-21 were comparison examples run outside of the scope of the invention and were used as controls during this study.

Compositions 1-11, which are included in the scope of the invention, are easily extrudable under normal blown film extrusion condotions. The control compositions containing concentrations of LP-LD ethylene-butene-1 copolymer lower than that included within the range of this invention, i.e., $< 20\%$ (runs with compositions 16, 17, 18) are equally extrudable compared to compositions included within the scope of the invention but exhibit inferior physical properties. Control compositions having concentrations of LP-LD ethylene-butene-1 copolymer higher than those included within the scope of this invention (runs with compositions 12, 13, 14, 15, 18, 19, 20, 21) show superior physical properties but are not easily extrudable under normal conditions.

CLAIMS:

1.   An extrudable composition suitable for forming a stretch wrap film, said composition comprised of:

more than 60% and less than 80% by weight of a high pressure, low density ethylene polymer; and

more than 20% and less than 40% by weight of a low pressure, low density hydrocarbon interpolymer.

2.   An extrudable composition as claimed in claim 1 further including:

more than 0.8% and less than 5% by weight of a liquid polybutene having a number average molecular weight below 3500 Daltons.

3.   A composition as claimed in claim 1 or claim 2 further including between 0.002 to 0.5% by weight of at least one anti-oxidant.

4.   A composition as claimed in any one of claims 1 to 3 wherein the high pressure, low density ethylene polymer is present in an amount greater than 68% and less than 75% by weight; and the low pressure, low density hydrocarbon interpolymer is present in an amount greater than 25% and less than 32% by weight.

5. A composition as claimed in claim 2 wherein the liquid polybutene is present in an amount greater than 1% and less than 3% by weight.

6. A composition as claimed in claim 5 wherein the number average molecular weight of the polybutene is greater than 600 and less than 2700 Daltons.

7. A composition as claimed in any one of the preceding claims wherein the high pressure, low density ethylene polymer is an ethylene/vinyl acetate copolymer.

8. A composition as claimed in claim 7 wherein the vinyl acetate content of the polymer is greater than 2% and less than 12% by weight.

9. A composition as claimed in any one of the preceding claims wherein the low pressure, low density hydrocarbon interpolymer is a copolymer of ethylene with one or more alpha olefins containing from 3 to 8 carbon atoms.

10. A composition as claimed in claim 9 wherein the low pressure, low density hydrocarbon interpolymer is an interpolymer of ethylene and two or more of the following monomers: propylene, butene-1, isobutylene, pentene-1, hexene-1, 4-methylpentene-1 and octene-1.

11. A composition as claimed in claim 9 wherein the low pressure, low density hydrocarbon interpolymer is an ethylene-butene-1 copolymer.

12. A method of preparing a stretch wrap film having a thickness between 8 $\mu$m and 51 $\mu$m, which method comprises:

slot cast extruding, under an extrusion temperature from 135$^\circ$C to 288$^\circ$C, an extrudable composition as claimed in any one of the preceding claims.

13. A method of preparing a stretch wrap film having a thickness between 8 $\mu$m and 51 $\mu$m, which method comprises:

blown film extruding, under an extrusion temperature from 135$^\circ$C to 245$^\circ$C, an extrudable composition as claimed in any one of claims 1 to 11.

14. A stretch wrap film produced in accordance with a method as claimed in claim 12 or claim 13 wherein the film has a transverse direction Elmendorf tear resistance greater than about 7.9 kg/mm, a machine direction Elmendorf tear resistance greater than about 3.2 kg/mm, an Instron puncture resistance greater than 59 J/mm, is capable of self-sealing at temperatures between -15$^{o}$C and 60$^{o}$C, and is essentially pinhole free at a thickness between 8 μm and 51 μm.

15. A stretch wrap film produced in accordance with a method as claimed in claim 12 or claim 13 and having a transverse direction Elmendorf tear resistance greater than about 8.9 kg/mm and a machine direction Elmendorf tear resistance greater than about 4.7 kg/mm.

MGB/SJW/DR/EA593

# EUROPEAN SEARCH REPORT

**European Patent Office**

0065359
Application number

EP 82 30 2073

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 277 852 (EXXON RESEARCH) * Claim 1; page 1, line 36 - page 3, line 25 * | 1-15 | C 08 L 23/04 C 08 J 5/18 |
| | --- | | |
| A | FR-A-2 277 134 (EXXON RESEARCH) * Claim 1; page 3, lines 22-27 * | 1-15 | |
| | --- | | |
| A | EP-A-0 014 539 (EXXON RESEARCH) * Claims 1,3; page 6, line 29 - page 9, line 14 * | 1-15 | |
| | ----- | | |

**TECHNICAL FIELDS SEARCHED (Int. Cl. 3)**

C 08 L
C 08 J

The present search report has been drawn up for all claims

| Place of search | Date of completion of the search | Examiner |
|---|---|---|
| THE HAGUE | 31-08-1982 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82